# EUROPÄISCHE PATENTSCHRIFT

(11) **EP 0 545 094 B1**
(45) Veröffentlichungstag und Bekanntmachung des Hinweises auf die Patenterteilung: **18.10.1995**
(21) Anmeldenummer: 92118960.1
(22) Anmeldetag: 05.11.1992
(51) Int. Cl.: F16J 9/12

(54) **Kolbenring**
Piston ring
Segment de piston

(30) Priorität: 06.12.1991 DE 4140232
(43) Veröffentlichungstag der Anmeldung: 09.06.1993
(73) Patentinhaber: AE GOETZE GmbH, D-51399 Burscheid (DE)
(72) Erfinder: Mader, Heinrich-Christian, Dipl.-Ing., W-5093 Burscheid (DE); Mierbach, Albin, Dipl.-Phys., W-5090 Leverkusen 3 (DE); Schmelter, Wolfgang, W-5090 Leverkusen 3 (DE)

(56) Entgegenhaltungen:
- SCHMID E. 'handbuch der dichtungstechnik' 1981, EXPERT VERLAG, GRAFENAU

## Beschreibung

Die Erfindung betrifft einen selbstspannenden Kolbenring mit ungleichmäßiger Radialdruckverteilung.

Neben der Gestaltung des Kolbenringquerschnittes und der Lauffläche sowie der Materialeigenschaften hat auch die Art der Radialdruckverteilung einen entscheidenden Einfluß auf ein günstiges Verschleißverhalten, insbesondere der Kolbenring-Lauffläche. Hochleistungskolbenringe haben grundsätzlich eine - über den Ringumfang betrachtet - ungleichmäßige Radialdruckverteilung, dabei wird von den Herstellern eine Druckverteilung angestrebt, die entweder der sogenannten Viertakt-Charakteristik oder Zweitakt-Charakteristik entspricht.

Bei ersterer handelt es sich um Kolbenringe mit einem höheren Radialdruck im Stoßbereich, um am Stoß eine Art Dämpfung zu erzeugen, damit die sonst üblichen Flatterbewegungen am Stoß nicht voll wirksam werden.

Kolbenringe mit Zweitakt-Charakteristik haben im Bereich der Stoßenden einen gegenüber den Viertaktringen reduzierten Radialdruck. Der höhere Radialdruck ist in die beiden Quadranten rechts und links vom Stoß verlegt. Aus dem SAE-Paper 831283 sind derartige Kolbenringe zu entnehmen. Darüber hinaus zeigt diese Schrift, daß ein erheblicher Teil der Wärme über die Kolbenringe vom Kolben zum Zylinder fließt. Auf Grund dessen ist ein Kolbenring am Innendurchmesser heißer als am Außendurchmesser, wo der Ring die Zylinderwand berührt. Diese Tatsache nimmt Einfluß auf das Abdichtverhalten des Kolbenringes beim Motor-Start, das heißt im kalten Zustand, als auch während des Betriebes, das heißt im warmen Zustand.

Ein Viertakt-Kolbenring liegt im kalten Zustand lichtspaltdicht an der Zylinderwand an. Gegenüber dem kalten Zustand vergrößert der Kolbenring im Betriebszustand seinen Krümmungsradius, da er sich am Innendurchmesser aufgrund der höheren Temperaturen stärker ausdehnt und damit mehr streckt als außen. Diese Krümmungsradiusveränderung führt an den Stoßenden zu einer undichten Anlage mit Punktkräften. Der dann nicht mehr lichtspaltdichte Ring unterliegt überhöhtem Laufflächenverschleiß an den Stoßenden und weist einen hohen Ölverbrauch in der Einlaufphase auf.

Der Zweitaktring verhält sich gegenüber dem Viertaktring genau umgekehrt. Im kalten Zustand liegt der Ring mit seinen Stoßenden lichtspaltundicht an der Zylinderwand an, wodurch Kaltstartprobleme auftreten. Durch thermische Expansion legen sich die Stoßenden erst in der Betriebsphase an die Zylinderwand an.

Der Erfindung liegt die Aufgabe zugrunde, einen gattungsgemäßen Kolbenring dahingehend zu verbessern, daß er sowohl im kalten als auch im warmen Zustand lichtspaltdicht an der Zylinderwand anliegt.

Diese Aufgabe wird erfindungsgemäß dadurch gelöst, daß der auf Nenndurchmesser gespannte Kolbenring an den Stoßenden im Winkel-Bereich beta < 25° einen Krümmungsradius aufweist, der dem Zylinderradius entspricht, und daß im Winkel-Bereich beta = 25 bis 35° beiderseits des Stoßes der Krümmungsradius kleiner als der Zylinderradius ist, so daß sich der Radialdruck an den Stoßenden im kalten Zustand auf Null und im Bereich beta = 25 bis 35° auf über 200 % des mittleren Radialdruckes einstellt.

Auf diese Weise liegen bereits im kalten Zustand alle Umfangspunkte des Kolbenringes lichtspaltdicht an der Zylinderwand an. Die im warmen Zustand auftretende Krümmungsradiusvergrößerung wird durch den relativ hohen Radialdruck beiderseits der Stoßenden kompensiert, das heißt eine Lichtspaltundichtheit wie bei Ringen mit Vier- oder Zweitakt-Charakteristik tritt zu keiner Zeit auf, so daß der Kolbenring sowohl im kalten als auch im warmen Zustand optimal abdichtet.

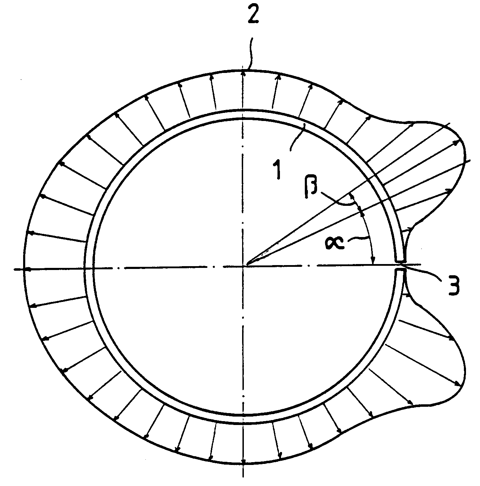

Die Erfindung ist in der Zeichnung dargestellt und wird im folgenden näher erläutert:
Der in der Figur abgebildete Kolbenring (1) ist im gespannten, auf Nenndurchmesser zusammengedrückten Zustand dargestellt. In diesem Zustand stellt sich eine Radialdruckverteilung (2) ein, die, am Stoß (3) beginnend, den Wert nahezu Null einnimmt, um dann auf einen Wert um mehr als 200 % des mittleren Radialdruckes anzusteigen. Der Maximaldruck liegt etwa im Winkel-Bereich beta = 25 bis 35° beidseitig des Ringstoßes (3).

## Patentansprüche

1. Selbstspannender Kolbenring mit ungleichmäßiger Radialdruckverteilung, dadurch gekennzeichnet, daß der auf Nenndurchmesser gespannte Kolbenring (1) an den Stoßenden im Winkel-Bereich alpha < 25° einen Krümmungsradius aufweist, der dem Zylinderradius entspricht, und daß im Winkel-Bereich beta = 25 bis 35° beidseitig des Ringstoßes der Krümmungsradius kleiner als der Zylinderradius ist, so daß die Radialdruckverteilung (2) an den Stoßenden nahezu auf Null und im Winkel-Bereich beta = 25 bis 35° auf über 200 % des mittleren Radialdruckes sich einstellt.

## Claims

1. Self-clamping piston ring with irregular distribution of radial pressure, characterised in that the piston ring (1), clamped to the normal diameter, has at the face ends in the angular region alpha < 25° a radius of curvature which corresponds to the cylinder radius, and in that, in the angular region beta = 25 to 35° on either side of the ring face, the radius of curvature is smaller than the cylinder radius, so that the distribution (2) of radial pressure at the face ends comes to nearly zero an in the angular region beta = 25 to 35°, to more than 200 % of the median radial pressure.

## Revendications

1. Segment de piston à contrainte intrinsèque ayant une répartition de pression radiale inégale, caractérisé en ce que le segment de piston (1) contraint sur un diamètre nominal présente aux extrémités d'appui dans un domaine angulaire alpha < 25° un rayon de courbure qui correspond au rayon du cylindre, et en ce que dans un domaine angulaire beta = 25° à 35°, des deux côtés de l'appui du segment, le rayon de courbure est inférieur au rayon du cylindre, de sorte que la répartition de pression radiale (2) aux extrémités d'appui s'établit proche de zéro, et dans le domaine angulaire beta = 25° à 35° s'établit audelà de 200 % de la pression radiale moyenne.
